# EUROPEAN PATENT APPLICATION

(11) **EP 2 180 403 A1**
(43) Date of publication of application: **28.04.2010**
(21) Application number: 08167093.7
(22) Date of filing: 21.10.2008
(51) Int. Cl.: G06F 9/445, G06F 11/14

(54) **Backup system that stores boot data file of embedded system in different storage sections and method thereof**

(71) Applicant: Moxa Inc., Shing Tien City Taipei Country 231 (TW)
(72) Inventor: Liao, Ben Ru, Shing Tien City, Taipei Country 231 (TW)
(74) Representative: Lang, Christian

(57) **Abstract**

This specification provides a backup system that stores a boot data file of an embedded system in a different storage section and a method thereof. By generating several file systems and after defining one of them as the backup file system, the backup boot data file is stored in the backup file system. When normally used boot data file cannot be used for booting, the backup boot data file is used. This solves the problem that the backup boot data file is stored in a file system that the user can freely access and thus may be damaged by the user. This achieves the technical feature that a specific embedded system can have several different file systems to store multiple boot data files.

## Description

### BACKGROUND OF THE INVENTION

### Field of Invention

This invention relates to a boot backup system and a method thereof. In particular, the invention relates to a backup system that stores a boot data file of an embedded system in different storage sections and a method thereof.

### Related Art

An embedded system is a computer system that is completely embedded in an electronic device for specific applications. Different from a general-purpose computer system such as the personal computer (PC), the embedded system usually carries a predefined task to complete certain requirements. In most circumstances, the embedded system has to operate correctly for a sufficiently long time. Therefore, their software development and tests have to be done more carefully than usual software on a PC.

In the embedded system, to avoid the system from being unable to power on, the operating system (OS) running therein usually has a backup mechanism for booting. Currently, without additional devices for backup, the boot backup mechanisms for the embedded system have two major types. One is to store backup boot data file and usual boot data file in different physical storage media. For example, built-in memory stores the usual boot data file, and some other storage medium stores the backup boot data file. When the usual boot data file cannot be read, the backup boot data file is read to complete the power on procedure so that the electronic device can be turned on smoothly.

The other mechanism is to store the usual boot data file and the backup boot data file in the same storage medium. In this mechanism, the usual boot data file and the backup boot data file may be stored in the same section or different sections. Whether they are stored in the same section or not, when the usual boot data file cannot complete the power on procedure, the embedded system directly read out the backup boot data file according to their addresses in the storage medium. Therefore, the embedded system can complete its booting procedure smoothly.

Although there are a couple of methods as mentioned above, the OS of specific embedded systems clearly states in its official documents that no two or more sections are allowed for the boot data files. Therefore, it is impossible to store the backup boot data file in a different section from the usual boot data file. If the storage medium allows the user to freely access, both the backup boot data file and the usual boot data file will be stored in the section that the user can manipulate.

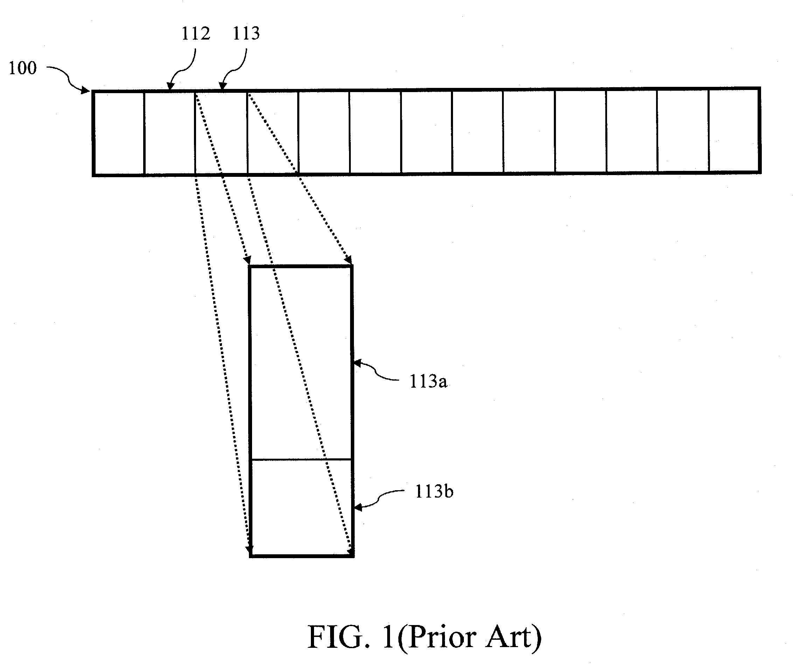

The storage medium used in most embedded systems is flash medium. Data access in the flash medium is in units of block. That is, even if the accessed data occupy only one byte, the input/output (I/O) is still performed on the entire block. As shown in FIG. 1, suppose the flash medium 100 is divided into many blocks. Let the usual boot data file be stored in the second block 112 and the third block 113, and only the first few parts 113a of the third block 113 contain the boot data file. If the user can freely access the usual boot data file, then the user's data may be stored in the latter parts 113b of the third block 113. In this case, the data in the third block 113 are first read into the memory and the user's data are updated therein. Afterwards, the data in the third block 113 are totally removed. The updated data in the memory are then written back into the third block 113, thereby completing the user's data writing.

During the above-mentioned process of writing user's data into the third block 113, suppose the embedded system has a power failure or other abnormal situation after the data in the third block 113 are cleared so that the updated data have not been written back to the third block 113. In this case, the usual boot data file is not complete for the embedded system to power on normally. Likewise, if the backup boot data file is also stored in the same section, they become incomplete as well. Therefore, neither the usual boot data file nor the backup boot data file can be used for booting.

In summary, the prior art long has the problem that the backup boot data file may be damaged by the user if they are stored in a storage section freely accessible to the user. Therefore, it is necessary to provide an improved technical solution.

### SUMMARY OF THE INVENTION

In view of the foregoing, the invention discloses a backup system that stores the boot data file of an embedded system in a different storage section and the method thereof.

The disclosed backup system includes: a flash medium; a file system generating module for executing a flash media driver (FMD) according to a plurality of access range parameters of the flash medium, thereby generating file systems that access different storage sections of the flash medium that correspond to the access range parameters; a file system defining module for defining one of the file systems as a backup file system and defining another non-backup file system as a primary file system; a system booting module for reading first boot data file via the primary file system and using it to boot and for reading second boot data file via the backup file system and using it to boot when the first boot data file cannot be used to boot normally; wherein the file system generating module generates several file systems and the file system defining module defines the backup file system for storing the second boot data file. The problem existing in the prior art can thus be solved.

The disclosed method includes the steps of: executing a FMD according to a plurality of access range parameters of the flash medium to generate file systems that access different storage sections of the flash medium that correspond to the access range parameters; defining one of the file systems as a backup file system; defining a non-backup file system as a primary file system; reading first boot data file via the primary file system and using it to boot; and reading second boot data file via the backup file system and using it to boot when the first boot data file cannot be used to boot normally. After generating several file systems, the backup file system for storing the second boot data file is defined. When the first boot data file cannot be used to boot, the second boot data file in the backup file system are used instead. This solves the problem existing in the prior art.

As described above, the disclosed system and method differ from the prior art in that several file systems are generated for the embedded system and one of them is defined as the backup file system for storing second boot data file. The second boot data file for the backup purpose is then stored in a different file system from the first boot data file. Through the above-mentioned technical means, the invention achieves the goal of providing an embedded system with different file systems for storing multiple boot data files.

### BRIEF DESCRIPTION OF THE DRAWINGS

The invention will become more fully understood from the detailed description given herein below illustration only, and thus is not limitative of the present invention, and wherein:

FIG. 1 is a schematic view of the storage structure in a conventional flash medium;

FIG. 2A is a schematic view showing the structure of the disclosed backup system that stores a boot data file of an embedded system in different storage sections;

FIG. 2B is another schematic view showing the structure of the disclosed backup system that stores a boot data file of an embedded system in different storage sections;

FIG. 3 is a flowchart of the disclosed backup method that stores a boot data file of an embedded system in different storage sections; and

FIG. 4 is a schematic view showing the storage sections of the primary file system and the backup file system according to the invention.

### DETAILED DESCRIPTION OF THE INVENTION

The present invention will be apparent from the following detailed description, which proceeds with reference to the accompanying drawings, wherein the same references relate to the same elements.

The embedded systems referred herein include, but not limited to, vehicle computers, set top boxes, production line control equipment, information station in public, smart phones, and personal digital assistants (PDA's). Some of them may even have no human-machine interface.

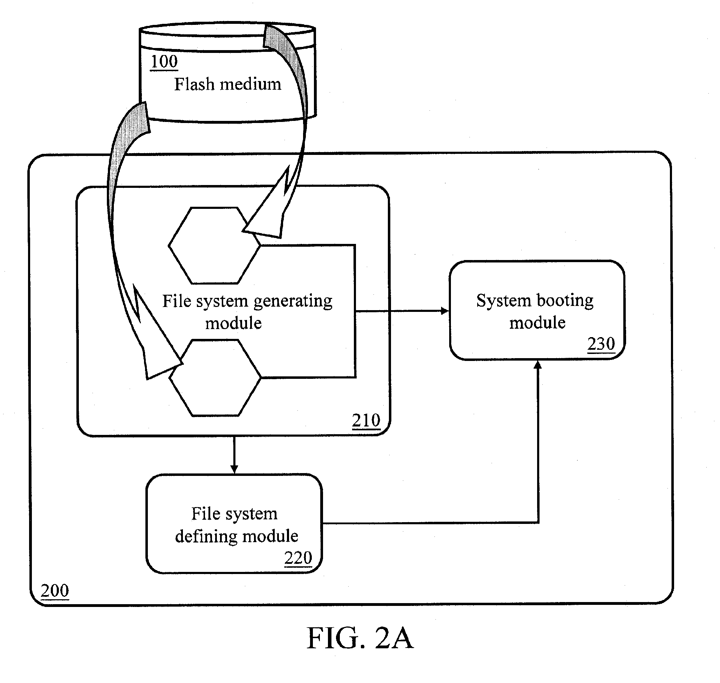

In the following, the system structure diagram of the disclosed backup system as shown in FIG. 2A is used to explain the system operation of the invention. As shown in the drawing, the disclosed system includes a flash medium 100, a file system generating module 210, a file system defining module 220, and a system booting module 230.

The flash medium 100 stores first boot data file and second boot data file required by the OS 200. Generally speaking, the flash medium 100 further stores a boot loader stored in the first block thereof.

The flash medium 100 uses the hive-based technique to store the first boot data file and the second boot data file. These files contain files that have to be loaded when the disclosed embedded system powers on.

The file system generating module 210 executes the FMD in the boot loader, thereby generating the file systems in the flash medium 100. During the file system generating process, the file system generating module 210 reads at least one set of access range parameters to restrict the storage sections of the generated file system in the flash medium 100.

The above-mentioned access range parameters define the accessible ranges of the generated file systems. They contain, but not limited to, a start address and a section length. The start address defines a beginning accessing address of a file system. The sum of the section length and the start address gives the ending accessing address of the file system. For example, suppose some set of access range parameters includes a start address of 0x380001 and a section length of 512K bytes. This implies that the storage section of the file system generated according to this set of access range parameters is from 0x380001 to 0x400000 in the flash medium 100. The access range parameters of the invention are not limited to the section length and the start address. One may also use the start address and the ending address or any parameters that can define a section for data storage as the access range parameters.

To provide a backup mechanism in the invention, the file system generating module 210 needs to generate two or more file systems so that the usual first boot data file and the backup second boot data file can be stored in storage sections of different file systems. Therefore, the file system generating module 210 has at least two sets of access range parameters.

If the number of file systems generated by the file system generating module 210 exceeds two, then not all the storage sections of the file systems store boot data files. That is, the invention only needs two file systems for string the first boot data file and the second boot data file. It does not need to store boot data files in all storage sections accessible to the file systems.

The file system defining module 220 defines one of the file systems generated by the file system generating module 210 as the backup file system and other non-backup file systems as primary file systems. The file system defining module 220 can determine which file system generated by the file system generating module 210 should be defined as the backup file system from the defined access range parameters, the addresses accessible to the file systems, an the sizes of storage sections accessible to the file systems. Generally speaking, the access range parameters include a value to define whether the access range thus defined is for the backup file system. Nevertheless, this is not the only method for defining the backup file system by the invention.

The storage section of the above-mentioned backup file system stores second boot data file for the backup purpose. Since the backup file system exists for the backup mechanism, the file system defining module 220 further sets the attribute of the backup file system as read-only, hidden, or read-only and hidden, so that the user cannot access and modify the second boot data file.

In addition to allowing free access by the user, the primary file system also stores first boot data file for usual booting. If the file system generating module 210 generates more than two file systems, then there will be more than one primary file system because only one backup file system is required in practice. In this case, only one of the primary files systems is required to store the first boot data file for normal booting of the system booting module 230.

The system booting module 230 reads the first boot data file from the primary file system and uses it to boot. When the system booting module 230 detects that the first booting data files cannot complete the normal booting procedure, it reads the second boot data file from the backup file system and use it to boot. This completes the backup mechanism.

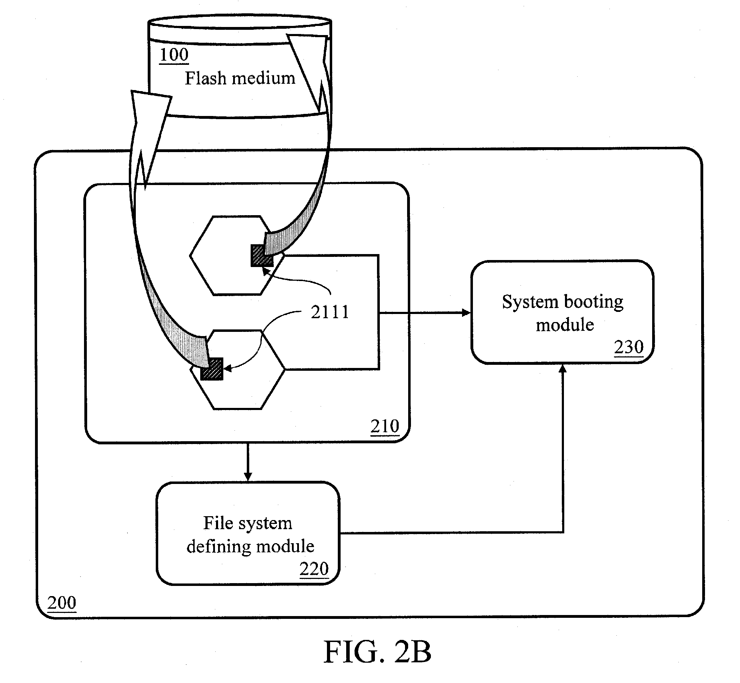

In order for the file systems generated by the file system generating module 210 to operate simultaneously without any problem, part of the program codes in the conventional OS for the embedded system has to be modified. That is, the invention modifies the conventional FMD. In the modified FMD, functions with the names of FMD_Init, FMD_EraseBlock, FMD_OEMIoControl, and FMD_WriteSector that execute data writing are added with the synchronization feature, so that each file system generated by the file system generating module 210 contains a synchronization unit 2111, as shown in FIG. 2B. The synchronization unit 2111 performs synchronization processes of write lock, write data, or disabling write lock when the file system writes data to the accessible storage section. This prevents the file system from dead lock or file write error during data access.

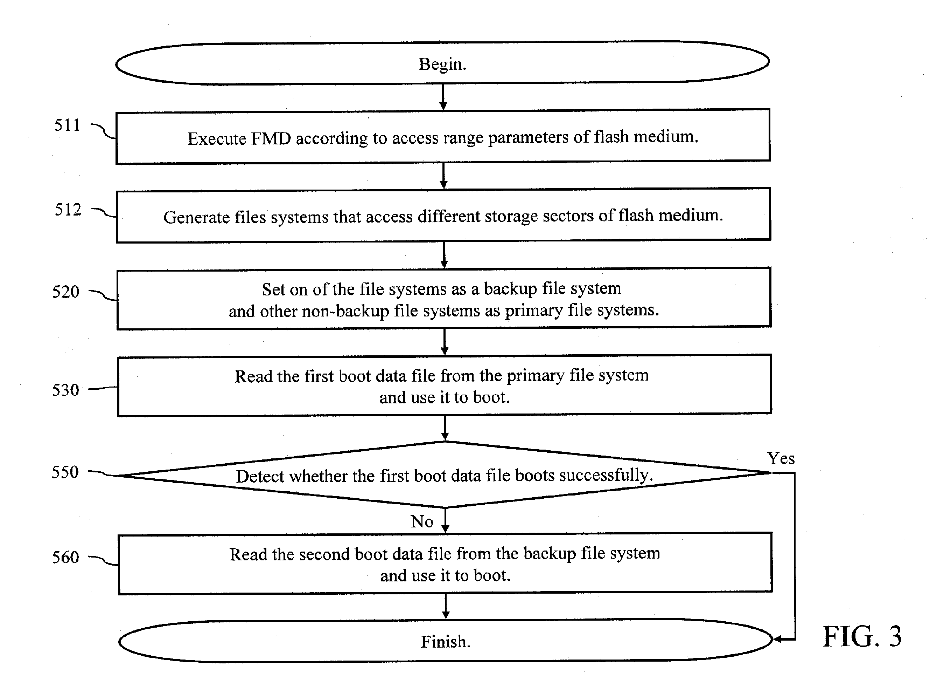

In the following, an embodiment is employed to explain the disclosed system and method. Please refer to FIG. 3 for the flowchart of the backup method according to the invention. Suppose in this embodiment that the storage space of the flash medium is 2M bytes.

If the embedded system used by the user contains the invention, then the file system generating module 210 first loads in the FMD and reads all the access range parameters when the embedded system is powered on. For example, suppose there are first access range parameters and second access range parameters. The first access range parameters include a start address of 0x0 and a section length of 1792K bytes. The second access range parameters include a start address of 0x1C0001 and a section length of 256K bytes. Moreover, the second access range parameters further include a value indicating that the access range is defined for the backup file system.

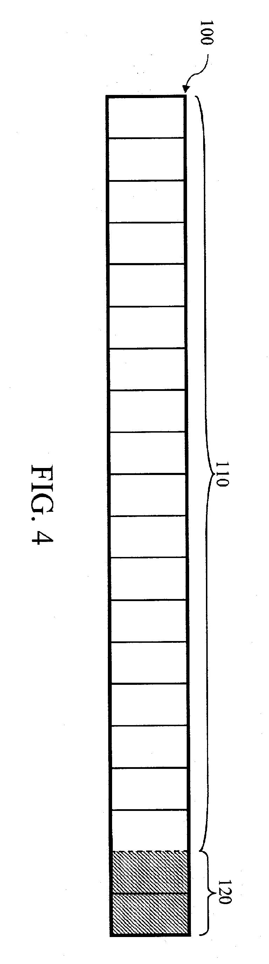

After the file system generating module 210 reads the two sets of access range parameters, it executes the FMD according to them (step 511) to produce two file systems (step 512). As shown in FIG. 4, the file system generated according to the first access range parameters can access the first storage section 110 in the flash medium 100. The file system generated according to the second access range can only access the second storage section 120.

After the file system generating module 210 generates the file systems (step 512), the file system defining module 220 sets the file system that can access the second storage section 120 according to the second access range parameters as the backup file system. The file system that accesses the first storage section 110 (i.e., non-backup file system) is set as the primary file system (step 520).

To prevent the user from accessing and damaging the second boot data file in the backup file system, the file system defining module 220 further sets attribute of the backup file system as read-only, hidden, or read-only and hidden after assigning the second storage section 120 to the backup file system. Consequently, the user cannot access the second storage section 120, thereby protecting the second boot data file.

After the file system defining module 220 fmishes the settings of the backup file system and the primary file system (step 520), the system booting module 230 reads the first boot data file stored in the first storage section from the primary file system and use it to boot (step 530). Concurrently, the system booting module 230 detects whether the booting process is successful when using the first boot data file to boot (step 550).

Suppose the system booting module 230 cannot use the first boot data file to complete the power on procedure. For example, when the user uses the embedded system last time, there is a power failure while updating the third block 113 so that the first boot data file is damaged. Then the system booting module 230 definitely cannot complete the power on procedure. Therefore, the system booting module 240 detects a failure of using the first boot data file to boot. It then reads the second boot data file stored in the second storage section 120 from the backup file system and uses it to boot (step 560). The power on procedure can thus be completely smoothly.

The disclosed FMD can further includes a synchronization unit, so that the primary file systems generated when the file system generating module 210 executes the FMD can be synchronized for writing. That is, when writing data (e.g., updated first boot data file or user data) into some block in the first storage section 110, the system first performs write lock on the block before writing data into it. After writing the data, the system disables write lock. Through the synchronization, the primary file system can be prevented from dead lock or write error while updating the first boot data file or writing user data. Likewise, the write synchronization is also performed when the backup file system generated when the file system generating module 210 executes the same FMD is updating the second boot data file.

In summary, the disclosed system and method differ from the prior art in that several file systems are generated for the embedded system and one of them is defined as the backup file system for storing the second boot data file. The second boot data file for the backup purpose is stored in a different file system from the first boot data file. When the first boot data file cannot be used to boot, the second boot data file can be used. This feature solves the problem that the boot data file is stored in a storage section that the user can freely access and may cause damage in the prior art. Moreover, the invention achieves the goal of providing specific embedded systems with different file systems to store multiple boot data files.

Besides, the disclosed backup method of storing the boot data file in different storage sections can be implemented in hardware, software, or the combination of hardware and software.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A backup method for an embedded system to store a boot data file of the embedded system in different storage sections, the method comprising the steps of:
executing a flash media driver (FMD) according to a plurality of access range parameters of a flash medium;
generating file systems that access different storage sections of the flash medium, wherein the storage sections correspond to the access range parameters;
setting one of the file systems as a backup file system;
setting at least one non-backup file system as a primary file system;
reading a first boot data file from the primary file system and using it to boot; and
reading a second boot data file from the backup file system and using it to boot when the first boot data file fails.

2. The backup method of claim 1, wherein the step of generating the file systems generates each of the file systems according to a start address and a section length contained in the access range parameters.

3. The backup method of claim 1, wherein the step of setting one of the file systems as the backup file system further includes the step of setting the attribute of the backup file system as read-only, hidden, or read-only and hidden.

4. A backup system for an embedded system to store a boot data file of the embedded system in different storage sections, comprising:
a flash medium;
a file system generating module, which executes a flash media driver (FMD) according to a plurality of access range parameters to generate file systems that access different storage sections of the flash medium corresponding to the access range parameters;
a file system defining module, which defines one of the file systems as a backup file system and at least one non-backup file system as primary file system; and
a system booting module, which reads a first boot data file from the primary file system and uses it to boot or, when detecting that the first boot data file fails to boot, reads a second boot data file from the backup file system and uses it to boot.

5. The backup system of claim 4, wherein the access range parameters include a start address and a section length.

6. The backup system of claim 4, wherein the file system defining module sets the attribute of the backup file system as read-only, hidden, or read-only and hidden.

7. The backup system of claim 4, wherein the first boot data file and the second boot data file are stored in the flash medium using the hive-based technique.

8. The backup system of claim 4, wherein the FMD further includes a synchronization unit for the primary file system / the backup file system to write data into the flash medium synchronously.
